# EUROPÄISCHE PATENTSCHRIFT

(11) **EP 1 997 667 B1**
(45) Veröffentlichungstag und Bekanntmachung des Hinweises auf die Patenterteilung: **12.01.2011**
(21) Anmeldenummer: 08090001.2
(22) Anmeldetag: 31.03.2008
(51) Int. Cl.: B60K 35/00, G06F 3/01

(54) **Informationsvermittlungsvorrichtung und Verfahren zur Vermittlung von Informationen**
Device and method for communicating information
Dispositif et procédé de communication d'informations

(30) Priorität: 31.05.2007 DE 102007025530
(43) Veröffentlichungstag der Anmeldung: 03.12.2008
(73) Patentinhaber: VOLKSWAGEN AG, 38436 Wolfsburg (DE)
(72) Erfinder: Kruscha, Tatjana, 38106 Braunschweig (DE)
(74) Vertreter: Patentanwälte Bressel und Partner

(56) Entgegenhaltungen:
- WO-A-01/29640
- WO-A-02/088824
- WO-A-2005/021314
- WO-A-2007/090593
- DE-A- 10 064 935
- DE-A- 19 744 382
- DE-A1-102004 005 816

## Beschreibung

Die Erfindung betrifft eine Informationsvermittlungsvorrichtung eines Kraftfahrzeugs und ein Verfahren zum visuellen Vermitteln von Informationen, wobei eine Darstellung der Informationen abhängig von einer erfassten Blickrichtung eines Nutzers ist.

Kraftfahrzeuge verfügen zur Informationsvermittlung über Anzeigeeinheiten. Diese umfassen in der Regel ein oder mehrere Anzeigevorrichtungen mit einer oder mehreren frei programmierbaren bzw. frei gestaltbaren Anzeigeflächen zum visuellen Anzeigen von Informationen auf. Als frei programmierbar oder frei gestaltbar wird eine Anzeigefläche angesehen, die an ein und derselben Darstellungsposition beliebige Informationen darstellen kann. Ein gewöhnlicher Videomonitor oder ein pixeliertes LCD-Display stellen beispielsweise solche frei gestaltbaren oder frei programmierbaren Anzeigeflächen dar. Im Gegensatz hierzu stellt beispielsweise ein Kombiinstrument in einem Kraftfahrzeugcockpit, das ein mechanisch ausgebildetes Zeigerinstrument und mehrere rückwärtig beleuchtbare Warnsymbole umfasst, eine Anzeigeeinheit dar, die keine frei programmierbare Anzeigefläche besitzt. Ein Kombiinstrument, das mit einer frei programmierbaren Anzeigefläche ausgestaltet ist, kann jedoch ebenfalls ein Zeigerinstrument bzw. eine Ansicht eines Zeigerinstruments darstellen.

In Kraftfahrzeugen nimmt die Menge bzw. die Anzahl der Informationen, die einem Nutzer (beispielsweise einem Fahrer) seitens des Kraftfahrzeugs zur Verfügung gestellt werden beispielsweise mit der Anzahl der im Fahrzeug verfügbaren Komfortfunktionen zu. Während als Audioquelle im Fahrzeug ursprünglich beispielsweise nur ein Autoradio zur Verfügung stand, sind heute als Audioquellen häufig zusätzlich ein CD-Spieler, ein MP3-Spieler, ein Mobiltelefon usw. verfügbar. Mit der Zunahme an Möglichkeiten nimmt auch die Anzahl der Informationen zu, die einem Nutzer bereitgestellt werden können und gegebenenfalls für eine Bedienung bereitgestellt werden müssen.

Ziel einer Informationsvermittlung muss es sein, dem Nutzer möglichst optimal die von ihm gewünschten Informationen bereitzustellen. Auch für eine Bedienung ist es notwendig, die Informationen über die unterschiedlichen Bedienmöglichkeiten und Bedienoptionen bereitzustellen. Somit werden im Folgenden auch grafisch dargestellte Bedienelemente als Informationen verstanden.

Aus dem Stand der Technik ist es bekannt, Darstellungselemente zu verwenden, mit denen die verfügbaren Informationen visuell angezeigt oder dargestellt werden. Beispielsweise können die Darstellungselemente als grafische Symbole mit oder ohne alphanumerische Bezeichnung, als alphanumerisch beschriftete Bedienelemente oder als animierte Symbole (beispielsweise in Form eines grafisch dargestellten Zeigerinstruments) usw. ausgebildet sein. Da die für eine grafische Darstellung der Informationen zur Verfügung stehende Anzeigefläche in einem Kraftfahrzeug begrenzt ist, ist es nicht möglich, alle Informationen zeitgleich anzuzeigen. Die Informationen werden im Stand der Technik daher häufig einer hierarchischen Menüstruktur zugewiesen. Die Zuordnung der Informationen erfolgt hierbei vorzugsweise orientiert an Anzeig- und/oder Bedienkontexten. Dieses bedeutet, dass gleichartige Bedienoptionen und/oder Informationen in einer Ansicht oder einem Menü zusammengefasst werden. Einem Nutzer wird so die Möglichkeit geboten, sich anhand der hierarchischen Struktur zu orientieren und so die einzelnen gewünschten Informationen oder Bedienoptionen aufzufinden, indem er das entsprechende Menü zur Anzeige bringt. Einzelne wichtige Informationen, wie beispielsweise eine aktuelle Geschwindigkeitsinformation, können permanent angezeigt werden. Solche Informationen sind dann häufig keinem Menü zugeordnet.

Auf einer Anzeigefläche kann daher ein Bereich vorgesehen sein, in dem Menüs dargestellt werden, und ein anderer Bereich vorgesehen sein, in dem permanent ausgewählte Informationen angezeigt werden. Beliebige Mischformen hiervon sind denkbar.

Um Fahrzeugfunktionen auslösen oder aktivieren zu können, ist es meist notwendig, eine von mehreren Bedienoptionen auszuwählen. Bei einer beispielsweise als Touchscreen ausgebildeten Anzeigevorrichtung, bei der die Anzeigefläche mit einer berührungsempfindlichen und positionserfassenden Sensoreinheit gekoppelt ist, werden beispielsweise verschiedene Bedienoptionen in Form von virtuellen Bedienelementen mit einer alphanumerischen oder piktogrammartigen Beschriftung auf der Anzeigefläche dargestellt. Eine Berührung der Anzeigefläche mit einem Finger löst die Bedienoption aus, deren Bedienelement an der entsprechenden Berührposition dargestellt ist. Wesentlich für die Bedienung ist somit die dargestellte Information.

Aus der DE 10 2004 005 816 A1 ist ein Kraftfahrzeug bekannt, bei dem Kraftfahrzeugfunktionen einzelnen auf Symbolflächen dargestellten Symbolen im Sichtbereich des Fahrers zugeordnet sind. Einer Vielzahl von Symbolflächen ist hierbei ein festes Symbol und somit eine feste Fahrzeugfunktion zugeordnet. Auf mindestens einer Symbolfläche sind verschiedene Symbole darstellbar. Das Kraftfahrzeug umfasst eine Einrichtung zur Erfassung der Blickrichtung des Fahrers bezügliche der Symbolflächen zur Bestimmung einer betrachteten Symbolfläche. Ist die Blickrichtung ermittelt, wird die Darstellung des auf der betrachteten Symbolfläche dargestellten Symbols verändert. Dieses erfolgt beispielsweise, indem ein hinter der Symbolfläche angeordnetes Leuchtmittel bei einem auf der Symbolfläche transparent ausgeführten Symbol blinkend betrieben wird. Bei einer Symbolfläche, die auf einer Flüssigkristallanzeige ausgebildet ist, kann das Symbol beispielsweise blinkend dargestellt werden, um dessen Blickauswahl hervorzuheben. Eine Auslösung der dem Symbol zugeordneten Fahrzeugfunktion erfolgt, indem eine die Blickauswahl bestätigende Eingabe mittels einer Bestätigungseinrichtung erfasst wird. Diese Ausführungsform ermöglicht es zwar eine größere Anzahl von Bedienoptionen im Blickfeld des Fahrers darzustellen, als auf einer frei gestaltbaren Anzeigefläche anzeigbar sind, jedoch kann den Symbolflächen, die nicht als frei gestaltbare Anzeigeflächen ausgestaltet sind, jeweils nur eine vorfestgelegte Bedienoption, d.h. eine Information, zugewiesen werden, sodass eine optimierte Darstellung der Informationen, insbesondere von zum Zeitpunkt der Herstellung des Kraftfahrzeugs noch unbekannten Bedienoptionen, die zu nach der Fertigstellung zugefügten Komfortfunktionen gehören, nicht erfolgen kann.

Aus der WO 01/29640 A2 ist eine Vorrichtung zur Darstellung von Informationen in einem Fahrzeug bekannt. Mittel zur Blickrichtungserkennung des Fahrers übermitteln die gemessene Blickrichtung, so dass Mitteln zur optischen Darstellung Informationen von verschiedenen Datenquellen in das Blickfeld des Fahrers einblenden.

Aus der DE 197 44 382 A1 ist eine Multifunktionsanzeige für ein Kraftfahrzeug bekannt, die eine Anzeige der wesentlichen Fahrgrößen und Motorparameter in einer von einer Sitzposition eines Fahrers und einer Lenkradstellung abhängigen, optimalen Position ermöglicht. Die dort beschriebene Multifunktionsanzeige umfasst eine Einrichtung zum Aufbereiten von Informatianssignalen, die eine Anzeigesteuerungseinrichtung für eine Anordnung von Anzeigelementen auf einem für den Fahrer sichtbaren Bereich des Anzeigebildschirms umfasst.

Aus der DE 100 64 935 A1 ist eine Anzeigevorrichtung für ein Kraftfahrzeug bekannt, bei der in einer im Armaturenbrett angeordneten Anzeigefläche mindestens eine Fahrzeuggröße wiedergegeben wird, deren Anzeigeort innerhalb der Anzeigefläche verstellbar ist.

Aufgabe der Erfindung ist es eine Informationsvorrichtung und ein Verfahren zur Vermittlung von Informationen zu schaffen, mit denen eine verbesserte Informationsdarstellung in einem Kraftfahrzeug, insbesondere von Informationen, die zu einer Bedienung von Kraftfahrzeugfunktionen notwendig sind, möglich ist.

Die technische Aufgabe wird erfindungsgemäß durch eine Infomnationsvorrichtung eines Kraftfahrzeugs mit den Merkmalen des Patentanspruchs 1 und einem Verfahren zur visuellen Informationsvermittlung in einem Kraftfahrzeug mit den Merkmalen des Patentanspruchs 12 gelöst. Vorteilhafte Ausgestaltungen ergeben sich aus den Unteransprüchen.

Hierfür ist vorgesehen eine Anzeigeeinheit, die mindestens eine frei gestaltbare Anzeigefläche umfasst mit einer Blickrichtungserfassungseinheit zu koppeln. Die von der Blickrichtungserfassungseinheit erfasste Blickrichtung eines Nutzers, vorzugsweise eines Fahrers, wird ausgewertet, um ein Blickverhalten zu ermitteln. Die dargestellten Informationen werden in Abhängigkeit von dem ermittelten Blickverhalten optimiert verändert dargestellt, um eine verbesserte an den Nutzer angepasste Wahrnehmung und Erkennung der Informationen zu ermöglichen, die keine gezielte Auswahl im Sinne einer Markierung darstellt, wie sie für ein Auslösen einer mit der Information gegebenenfalls verknüpften Funktion notwendig wäre. Insbesondere wird eine Informatiorisvermittlungsvorrichtung eines Kraftfahrzeugs zum visuellen Vermitteln von Informationen umfassend eine Anzeigeeinheit zum Anzeigen der visuellen Informationen, eine Steuereinheit, die die Darstellung der visuellen Informationen mittels der Anzeigeeinheit steuert, eine Blickrichtungserfassungselnheit, die eine Blickrichtung eines Nutzers erfasst, wobei die Steuereinheit eine Darstellung der Informationen in Abhängigkeit von der erfassten Blickrichtung des Nutzers steuert, geschaffen, wobei die Steuereinheit eine Auswerteeinheit zum Auswerten der erfassten Blickrichtung und zum Ermitteln eines Blickverhaltens umfasst, und die Anzeigeeinheit mindestens eine frei gestaltbare/programmierbare Anzeigefläche umfasst und die Steuereinheit ausgebildet ist, eine Darstellung der visuellen Informationen auf der Anzeigefläche abhängig von dem ermittelten Blickverhalten zu verändern, wobei die veränderte Darstellung nicht zur unmittelbaren visuellen Hervorhebung einer aktuellen Auswahl und/oder Blickrichtung vorgesehen ist. Hierdurch wird erreicht, dass die Darstellung an die Blickgewohnheiten eines Fahrers angepasst werden kann, so dass für ihn die Informationen schneller erfassbar sind. Hierdurch wird insgesamt die Fahrsicherheit gesteigert, da ein Blick des Fahrers dem Straßenverkehrsgeschehen nur eine kürzere Zeitspanne entzogen wird. Dadurch, dass auch eine bessere Wahrnehmbarkeit erreicht wird, sinkt die Wahrscheinlichkeit für eine Fehlerfassung oder gar für eine Nicht-Erfassung von Informationen. Die Blickrichtung gibt die Richtung an, entlang derer ein Blick des Nutzers gerichtet ist. Die Blickrichtung kann somit als gerichtete Strecke angesehen werden, die von dem oder den Augen ausgeht. Die Blickrichtung ist jedoch auch eindeutig durch einen betrachteten Ort festgelegt, welcher einen Schnittpunkt der gerichteten Strecke mit einem Objekt darstellt. Somit kann auch ein solcher betrachteter Ort als Blickrichtung angesehen bzw. bezeichnet werden.

Gemäß der Erfindung umfasst die aufgrund des ermittelten Blickverhaltens veränderte Darstellung eine Veränderung der Darstellungspositionen von mehreren Darstellungselementen zueinander auf der mindestens einen Anzeigefläche. Dieses bedeutet, dass mehrere Informationen angezeigt werden. Hierbei werden die unterschiedlichen Informationen von Darstellungselementen dargestellt. Sie können beispielsweise als Textfelder, virtuelle Bedienelemente, Symbole, animierte Symbole, die ihre Gestalt mit der dargestellten Information verändern (wie beispielsweise ein grafisch dargestelltes Zeigerinstrument für eine Geschwindigkeits- oder Motordrehzahlanzeige), usw. ausgestaltet sein.

Eine andere Ausführungsform der Erfindung sieht vor, dass die aufgrund des ermittelten Blickverhaltens veränderte Darstellung eine Veränderung der Darstellungsgröße mindestens eines Darstellungselements auf der mindestens einen Anzeigefläche umfasst. Hierdurch kann die Wahrnehmbarkeit von Darstellungselementen gesteigert werden, wenn ein Nutzer sie besonders lange, insbesondere häufiger besonders lange, fixiert. Hierdurch können die Darstellungselemente, d.h., die Visualisierung von Informationen, über die sich der Nutzer offensichtlich genauer und/oder häufiger informieren möchte, vergrößert dargestellt werden.

Eine Ausführungsform der Erfindung sieht beispielsweise vor, dass die Auswerteeinheit ausgebildet ist, für Darstellungselemente eine Betrachtungshäufigkeit und eine Betrachtungsdauer zu ermitteln, und die Steuereinheit ausgebildet ist, in der veränderten Darstellung die Darstellungselemente abhängig von ihrer ermittelten Betrachtungshäufigkeit und Betrachtungsdauer darzustellen, wobei die Darstellungselemente mit einer größeren Betrachtungshäufigkeit und/oder einer längeren Betrachtungsdauer größer und/oder und zentraler oder in bevorzugten Gebieten dargestellt werden. Vergrößert und zentral dargestellte Darstellungselemente werden von einem Nutzer einfacher und schneller erfasst.

Bei einer bevorzugten Ausführungsform der Erfindung umfasst das Auswerten der erfassten Blickrichtung ein Ermitteln von wiederkehrenden Blickrichtungssequenzen und/oder Darstellungselementsequenzen, wobei Darstellungselementsequenzen ermittelt werden, indem die Blickrichtungen über Darstellungspositionen der Darstellungselemente den Darstellungsalementen zugeordnet werden. Anhand von Blickrichtungssequenzen und/oder Darstellungselementsequenzen kann auf wiederkehrende Informations- und/oder Bedienbedürfnisse geschlossen werden, insbesondere wenn es sich bei den Darstellungselementen um Bedienelemente oder für eine Bedienung relevante Informationen handelt. Hieraus können Informations- und Bediengewohnheiten des Nutzers abgeleitet werden. Eine Veränderung der Darstellung erfolgt angepasst an dieses Blickverhalten beispielsweise so, dass eine Blickrichtungssequenz beispielsweise so vereinfacht wird, dass von einem Nutzer im zeitlichen Zusammenhang betrachtete Darstellungselemente auch räumlich gemeinsam dargestellt werden.

Eine Darstellungselementsequenz kann als eine sortierte Liste von Darstellungselementen betrachtet werden, die in der Reihenfolge, in der sie in der Liste auftreten betrachtet wurden oder werden.

Eine angepasste und verbesserte Darstellung der Informationen erreicht man auch, wenn die Auswerteeinheit ausgebildet ist, beim Ermitteln des Blickverhaltens nicht bevorzugte Gebiete der Anzeigefläche, die nicht im Blickfeld des Nutzers liegen oder für den Nutzer nur schlecht betrachtbar sind, und bevorzugte Gebiete zu ermitteln, die im Blickfeld des Nutzers liegen und gut betrachtbar sind, und die Steuereinheit ausgestaltet ist, in der veränderten Darstellung ursprünglich in den nicht bevorzugten Gebieten dargestellte sicherheitsrelevante und/oder fahrrelevante Informationen in der veränderten Darstellung in den bevorzugten Gebieten darzustellen. Hierdurch wird eine Wahrnehmungswahrscheinlichkeit fahr- und sicherheitsrelevanter Informationen gesteigert. Ferner wird auch die Zeitspanne, die durchschnittlich vergeht, bis diese Informationen wahrgenommen werden gesenkt, da die in den bevorzugten Gebieten abgebildeten Informationen in der Regel aufgrund der höheren Betrachtungshäufigkeit und gegebenenfalls Betrachtungsdauer eher wahrgenommen werden als Informationen in nicht bevorzugten Gebieten der Darstellungsfläche, die schwer oder gar nicht für den Nutzer einsehbar sind oder selten betrachtet werden.

Bei einer bevorzugten Ausführungsform der Erfindung arbeitet die Blickrichtungserfassungseinheit hinsichtlich des Nutzers berührungslos. Dieses bedeutet, dass mit dem Nutzer kein Gegenstand mechanisch wechselwirkt, um die Blickrichtung der Augen zu ermitteln. Insbesondere muss der Nutzer keinerlei Gestell oder spezielle Brille tragen, an denen eine Blickrichtungserkennungseinheit befestigt wäre. Hierdurch wird eine angenehme Nutzungsumgebung geschaffen und eine Akzeptanz für eine Nutzung einer blickrichtungsbeeinflussten Informationsvermittlung gesteigert.

Ziel einer Informationsvermittlung im Kraftfahrzeug muss es sein, dem Nutzer möglichst nur die den Nutzer interessierenden Informationen anzubieten. Eine bevorzugte Ausführungsform der Erfindung sieht daher vor, dass die Steuereinheit ausgebildet ist, in der veränderten Darstellung Darstellungselemente mit einer geringen Betrachtungsdauer und/oder Betrachtungshäufigkeit im Verhältnis zu anderen Darstellungselementen aus einem Informations- oder Bedienkontext durch Darstellungselemente anderer Bedienkontexte mit einer hohen Betrachtungsdauer und/oder Betrachtungshäufigkeit in deren originären Bedienkontext zu ersetzen. Bei dieser Ausführungsform ist es möglich, beispielsweise in einem Bedienkontext die dargestellten Informationen so zu optimieren, dass selten oder nie genutzte Darstellungselemente ausgeblendet werden. Diese werden vorzugsweise durch andere Informationen ersetzt, die originär anderen Bedienkontexten zugeordnet waren. Hierdurch werden völlig neue "Bedienkontext-Ansichten" oder Informations-Ansichten geschaffen, die originär auf mehrere Bedienkontexte verteilte Informationen, in einer an die Bedürfnisse des Nutzers angepassten Ansicht dargestellt werden. Eine Anpassung kann so ausgestaltet sein, dass ein Ersetzen erst nach einer Abfrage an den Nutzer ausgeführt wird. Ferner kann vorgesehen sein, dass die entfernten Darstellungselemente auf andere Weise zur Anzeige gebracht werden können. Dieses bedeutet, dass sie einer anderen Ansicht zugewiesen werden oder der Nutzer in eine ursprüngliche (Bedien-)Kontext-Ansicht zurückkehren kann.

Eine als besonders angenehm von dem Nutzer empfundene Ausgestaltung der Erfindung erhält man, wenn die Steuereinheit ausgebildet ist, anhand einer ermittelten Blickrichtungssequenz, insbesondere einer hieraus abgeleiteten Blickrichtungsbewegung, eine Bedienintention abzuleiten und eine veränderte Darstellung zu veranlassen, die eine an die Bedienintention angepasste Darstellung von entsprechenden Darstellungselementen veranlasst, wobei mindestens ein Darstellungselement zusätzlich oder zumindest vergrößert oder an einer veränderten Darstellungsposition angezeigt wird. Hierdurch wird eine Bedienung von Funktionen des Kraftfahrzeugs stark vereinfacht. Die Zeit, die ein Nutzer zum Aufnehmen von Informationen oder ein Vornehmen von Bedienhandlungen benötigt, wird reduziert. Somit hat der Nutzer als Fahrer des Kraftfahrzeugs mehr Zeit sich auf den Verkehr zu orientieren.

Eine Analyse der Blickrichtungen des Nutzers über einen Zeitraum, lässt jedoch auch Rückschlüsse auf einen Zustand des Nutzers zu. Beispielsweise kann ein wiederholtes "Springen" der Blickrichtung auf unterschiedliche Objekte in einem Bedienkontext, in dem der Nutzer aufgefordert ist, eine Eingabe zu tätigen, darauf hinweisen, dass der Nutzer aktuell überfordert ist. Eine bevorzugte Ausführungsform ist daher so ausgestaltet, dass die Steuereinheit ausgebildet ist, anhand einer Analyse der Blickrichtungssequenz und/oder der Darstellungselementsequenz eine aktuelle Überforderung des Nutzers zu ermitteln und in der veränderten Darstellung Hilfeoptionen anbietende Darstellungselemente einzufügen und/oder Darstellungselemente durch zusammenfassende Darstellungselemente zu ersetzen, um eine übersichtlichere Darstellung zu schaffen.

Insbesondere bei Kraftfahrzeugen mit einer großen Anzeigefläche oder mit mehreren Anzeigeflächen wird die Informationsvermittlung und somit gegebenenfalls auch eine Bedienung stark vereinfacht, wenn die Anzeigefläche ein Präferenzgebiet umfasst und die Auswerteeinheit ausgebildet ist, Präferenzgewichte anhand von den Darstellungselementen zugewiesenen vorgegebenen Gewichtungsfaktoren, deren Betrachtungshäufigkeiten und deren Betrachtungsdauern zu ermitteln, und die Steuereinheit ausgebildet ist, in einem Präferenzgebiet der Darstellungsfläche Darstellungselemente ausgewählt nach ihrem Präferenzgewicht darzustellen. In dem Präferenzgebiet, werden somit die Darstellungselemente gesammelt dargestellt, die der Nutzer besonders häufig benutz, auch wenn sie originär unterschiedlichen Bedienkontexten zugeordnet sind. Unter einem originären Bedienkontext wird der Zusammenhang von Darstellungselementen und/oder Informationen verstanden, die sich thematisch und/oder bedientechnisch auf einen Sachzusammenhang beziehen. In einem Sachzusammenhang, der sich beispielsweise mit Bedienung eines MP3-Players befasst, sind ursprünglich alle Funktionen in Form von Bedienelementen in einer Ansicht dargestellt, die eine Bedienung de MP3-Players ermöglichen. Die den häufig genutzten Funktionalitäten und Funktionen zugeordneten Darstellungselemente, die vorzugsweise als Bedienfelder ausgebildet sind, werden so in einem Präferenzbereich zusammengefasst, auch wenn sie ursprünglich unterschiedlichen Anzeige- und/oder Bedienkontexten zugeordnet sind. Die einzelnen Informationen oder Darstellungselementen zugeordneten Gewichtungsfaktoren ermöglichen es, unterschiedlichen Informationen und/oder Darstellungselementen oder Gruppen hiervon unterschiedlich zu gewichten. So können beispielsweise bei einer menügestützten Informationsvermittlung Darstellungselemente, die Funktionen zugeordnet sind, für deren Aufruf eine Vielzahl von einzelnen Bedienschritten vorgesehen ist, eine höhere zugeordnete Gewichtung aufweisen, als Darstellungselemente, die in einer oberen Menüebene angeordnet sind.

Die Erfindung wird nachfolgend anhand eines bevorzugten Ausführungsbeispiels erläutert. In den zugehörigen Zeichnungen zeigen:
- Fig. 1a: eine schematische Ansicht eines Kraftfahrzeugcockpits, in dem Informationen an einen Nutzer visuell vermittelt werden;
- Fig. 1b: eine schematische Ansicht des Kraftfahrzeugcockpits, wobei die Information basierend auf einem ermittelten Blickverhalten eines Nutzers verändert dargestellt werden; und
- Fig.2a: eine schematische Ansicht einer Anzeigefläche einer Vorrichtung zur Informationsvermittlung in einem Kraftfahrzeug;
- Fig. 2b, 2c: schematische Ansichten der Anzeigefläche nach Fig. 2a, wobei die dargestellten Informationen basierend auf einem ermittelten Blickverhalten verändert dargestellt sind;
- Fig. 3a: eine weitere schematische Ansicht einer Anzeigefläche einer Informationsvermittlungsvorrichtung in einem Kraftfahrzeug; und
- Fig. 3b: eine beispielhafte schematische Ansicht der Anzeigefläche nach Fig. 3a, die sich ergibt, wenn für die Darstellung der Informationen gemäß der Fig. 3a anhand des ermittelten Blickverhaltens eine Überforderung ermittelt ist.

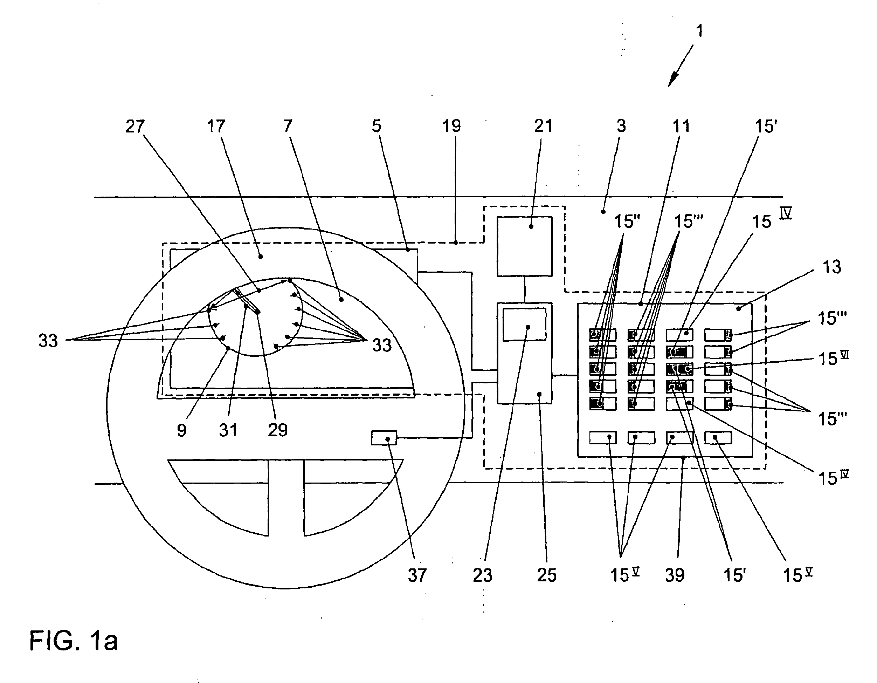

In Fig. 1a ist schematisch ein Ausschnitt eines Kraftfahrzeugcockpits 1 dargestellt. In ein Armaturenbrett 3 ist ein als Multifunktionsanzeige 5 ausgebildetes Kombi-Instrument integriert. Die Multifunktionsanzeige 5 weist eine in Pixel unterteilte (pixelierte) Anzeigefläche 7 auf. Auf der Anzeigefläche 7 ist beispielsweise als animiertes Darstellungselement oder animiertes Symbol ein Geschwindigkeitsmesser 9 grafisch als Zeigerinstrument dargestellt. Zur Vermittlung einer Geschwindigkeitsinformation, wird eine Zeigerstellung grafisch animiert. An der Zeigerstellung kann ein Nutzer die aktuelle Geschwindigkeit des Kraftfahrzeugs ablesen.

Ferner ist in das Armaturenbrett eine weitere Anzeigevorrichtung 11 mit einer weiteren Anzeigefläche 13 integriert. Auf der weiteren Anzeigefläche 13 sind mehrere Darstellungselemente 15 dargestellt.

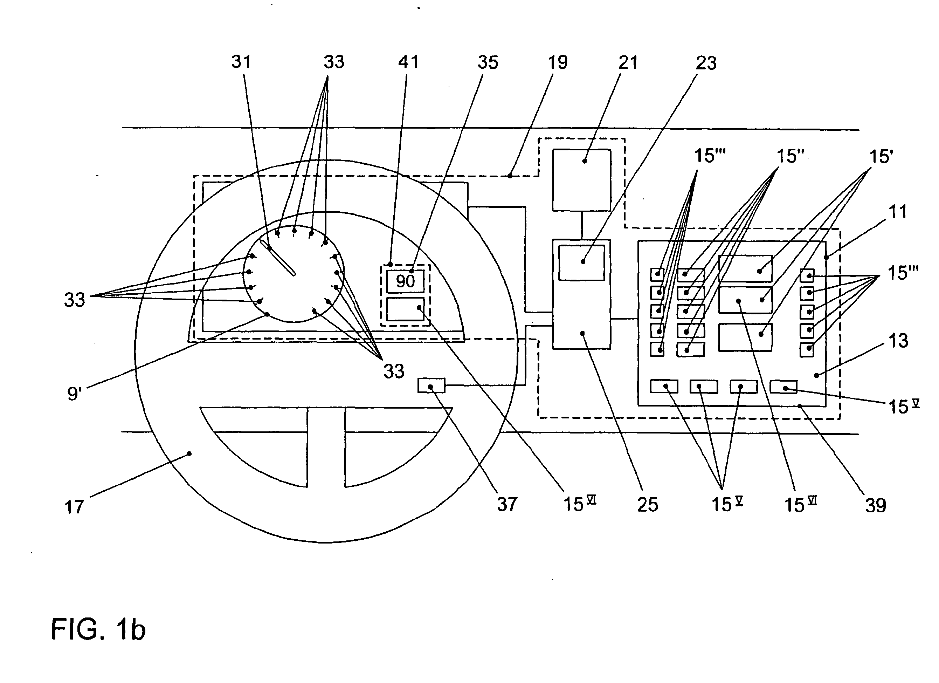

Die Anzeigefläche 7 der Multifunktionsanzeige 5 ist für eine Betrachtung durch den Nutzer (nicht dargestellt) teilweise durch ein Lenkrad 17 verdeckt. Fig. 1a und 1b zeigen die Ansicht des Kraftfahrzeugcockpits 1, wie sie der Nutzer sieht.

Das Kraftfahrzeugcockpit ist mit einer Vorrichtung zur Informationsvermittlung ausgestattet, deren Informationsvermittlung 19 von einem Blickverhalten des Nutzers abhängig ist. Gestrichelt dargestellte Objekte sind in der Regel für einen Nutzer nicht optisch wahrnehmbar und stellen beispielsweise Zusammengehörigkeiten von einzelnen Objekten zu übergeordneten Einheiten oder verdeckt angebrachten Einheiten dar. Die Informationsvermittlungseinheit 19 umfasst in der beschriebenen Ausführungsform die Multifunktionsanzeige 5 und die weitere Anzeigevorrichtung 11. Die Multifunktionsanzeige und/oder die weitere Anzeigevorrichtung 11 sind vorzugsweise als Touchscreen ausgebildet. Andere Ausführungsformen können auch nur eine Anzeigevorrichtung umfassen.

Zur Darstellung von Informationen verwendete Einheiten werden hier als Darstellungselemente bezeichnet. Die Darstellungselemente umfassen beispielsweise alphanumerische Zeichenketten und Textfelder, Symbole, animierte Symbole, die ihre Erscheinungsform bei der Informationsvermittlung verändern, wie beispielsweise das oben beschriebene grafisch dargestellte Zeigerinstrument, als Knöpfe ausgestaltete virtuelle Bedienelemente, Grafiken (Landkarten, Balkendiagramme, etc.) usw.

Um eine Darstellung der Informationen blickverhaltensabhängig ausgestalten zu können, umfasst die Informationsvermittlungseinheit 19 im Kraftfahrzeugcockpit eine Blickrichtungserfassungseinheit 21. Diese umfasst vorzugsweise mindestens eine Kamera, deren Bilder softwaretechnisch aufbereitet und ausgewertet werden, um eine Blickrichtung des Nutzers zu ermitteln. Hierfür kann eine Kalibrierung der Blickrichtungserfassungseinheit 21 notwendig sein. Wie eine Blickrichtungserfassungseinheit 21 ausgestaltet sein kann, ist aus dem Stand der Technik bekannt.

Blickt der Nutzer auf die Anzeigefläche 7 der Multifunktionsanzeige 5 oder die weitere Anzeigefläche 13, so werden von der Blickrichtungserfassungseinheit 21 die Koordinaten geliefert, die eine betrachtete Position auf einer der Anzeigeflächen 7, 13 angeben. Ist die Blickrichtungserkennungseinheit 21 mit einem dreidimensionalen Modell eines Kraftfahrzeuginnenraums des entsprechenden Kraftfahrzeugs versehen, so kann die Blickrichtungserfassungseinheit 21 auch ermitteln, welche Bereiche der Anzeigefläche oder der weiteren Anzeigefläche der Nutzer nicht oder nur erschwert betrachten kann. Dieses kann unter anderem aus den Blickrichtungen abgeleitet werden, die im Sinne dieser Erfindung eine Richtungen im Raum ausgehend von dem Gesicht des Nutzers sein können. In anderen Ausführungsformen kann die Blickrichtung aber auch eine Angabe des betrachteten Ortes sein.

Die Blickrichtungserfassungseinheit 21 ist mit einer Auswerteeinheit 23 verbunden, die die ermittelten Blickrichtungen auswertet und von einer Steuereinheit umfasst ist. Eine Auswertung kann zwischen der Blickrichtungserfassungseinheit 21 und der Auswerteeinheit 23 unterschiedlich aufgeteilt sein. Bei einer Ausführungsform kann vorgesehen sein, dass die Blickrichtungserfassungseinheit 21 tatsächlich nur die Richtung des Blickes, das heißt einen Vektor, sowie eine Position des Kopfs des Betrachters ausgibt. In einem solchen Fall wird die Bestimmung einer beispielsweise auf der weiteren Anzeigefläche 13 betrachteten Position in der Auswerteeinheit 23 vorgenommen.

Die Auswerteeinheit 23 analysiert die ermittelten Blickrichtungen aber auch noch weiter und bestimmt ein Blickverhalten. Hierzu werden beispielsweise Blickmuster, d.h. Muster die sich aus der Abfolge der betrachteten Positionen ergeben, Betrachtungsdauern, Betrachtungshäufigkeiten von Positionen auf der Anzeigefläche 7 oder der weiteren Anzeigefläche 13 ermittelt und ausgewertet.

Für Zwecke der Auswertung können die Anzeigefläche 7 und/oder die weitere Anzeigefläche 13 gedanklich in Felder aufgeteilt sein. Betrachtungspositionen in einem der Felder werden einer dem Feld zugeordneten Feldposition zugeordnet.

Aus den Blickrichtungen (Betrachtungspunkten 11) können Blickrichtungssequenzen ermittelt werden. Ebenso ist es möglich, die Blickrichtungen betrachteten Darstellungselementen zuzuordnen. Hierbei erfolgt eine Zuordnung der Blickrichtungen zu den Darstellungselementen darüber, dass ein Darstellungselement als betrachtet angenommen wird, wenn die Blickrichtung des Nutzers, d.h., die betrachtete Position, mit einer Darstellungsposition eines entsprechenden Darstellungselements übereinstimmt. Für diese Zwecke kann die Anzeigefläche erneut in Felder unterteilt sein und eine Übereinstimmung festgestellt werden, wenn die betrachtete Position und zumindest ein Teil des Darstellungsbereiches des entsprechenden Darstellungselements in dem entsprechenden Feld liegen. So ist es möglich aus einer Blickrichtungssequenz eine Darstellungselementsequenz zu ermitteln, die die nacheinander betrachteten Darstellungselemente umfasst. Gegebenenfalls kann jedem Darstellungselement zusätzlich eine entsprechende Betrachtungsdauer zugeordnet sein. Ebenso ist es möglich, Darstellungselemente nur in eine Darstellungselementsequenz aufzunehmen, wenn eine hinreichende Betrachtungsdauer erreicht ist, die vorgegeben ist. Die hinreichende Betrachtungsdauer kann vom Fachmann entsprechend den Anforderungen gewählt werden.

Ergibt die Auswertung, dass bestimmte Informationen, d.h. die die Informationen visualisierenden Darstellungselemente, von einem Nutzer beispielsweise gehäuft in einer bestimmten Reihenfolge betrachtet werden, so kann diese Darstellungselementsequenz verwendet werden, um die Darstellung der Darstellungselemente zu verändern.

Für die Ansteuerung der Multifunktionsanzeige 5 und der weiteren Anzeigevorrichtung 11 umfasst die Informationsvermittlungseinheit 19 die Steuereinheit 25. Diese steuert die visuelle Darstellung der Informationen mittels der Darstellungselemente 15.

Es können unterschiedliche Kriterien für eine Anpassung der Darstellung der Informationen festegelegt werden. Hier sollen exemplarisch einige aufgezeigt werden.

Mit Hilfe von Pfeilen ist schematisch eine erste Blickrichtungssequenz 27 visualisiert, die während des Betrachtens des Geschwindigkeitsmessers 9 ermittelt wurde. Das Kraftfahrzeug fährt mit einer Geschwindigkeit, dessen zugehöriger Geschwindigkeitswert auf dem Geschwindigkeitsmesser 9 durch das Lenkrad 17 für den Nutzer verdeckt ist. Der Blick des Nutzers folgt zunächst von einem Mittelpunkt 29 des Geschwindigkeitsmessers 9 einem Verlauf einer grafisch dargestellten Tachonadel 31. Wenn der Blick auf das Lenkrad 17 fällt, weicht der Blick zur Seite aus, um einen nächstgelegenen wahrnehmbaren geringeren Geschwindigkeitswert zu ermitteln. Die Geschwindigkeitswerte sind durch Striche 33 angedeutet. Anschließend wandert der Blick zu einer anderen Seite der Tachonadel 31 aus, um den nächsthöheren wahrnehmbaren Geschwindigkeitswert zu erfassen. Schließlich wandert der Blick zwischen diesen beiden erfassten Geschwindigkeitswerten und der Tachonadel hin- und -her, um anhand der abgeschätzten Entfernungen der Tachonadel von den beiden Geschwindigkeitswerten und einer Differenz der Geschwindigkeitswerte die tatsächliche Geschwindigkeit zu schätzen. Die Auswerteeinheit ist nun so ausgebildet, dass sie ein Muster einer solchen Blicksequenz erkennt und hieraus ableitet, dass für den Nutzer der Geschwindigkeitsmesser nicht optimal wahrnehmbar ist. Daraufhin veranlasst die Steuereinheit, dass in einer veränderten Darstellung der Informationen, die in Fig. 1b gezeigt ist, der angepasste Geschwindigkeitsmesser 9' an einer anderen Position auf der Anzeigefläche der Multifunktionsanzeige 5 dargestellt wird. Alternativ oder zusätzlich kann vorgesehen sein, dass zusätzlich ein neues Darstellungselement 35 angezeigt wird, das die Geschwindigkeit alphanumerisch angibt. Es ergibt sich, dass die soeben beschriebene Blickrichtungssequenz lediglich exemplarischen Charakter hat.

Bei einem Teil der Darstellungselemente 15, die auf der weiteren Anzeigefläche 13 dargestellt sind, gibt eine Schwärzung, d.h. der schwarz gefärbte Flächenanteil, an, wie häufig (wie lange oder wie lange und häufig) das entsprechende Darstellungselement (die entsprechende Information) betrachtet wurde. Automatisch oder nach dem Erfassen einer Bestätigung durch den Nutzer auf eine entsprechende Abfrage, beispielsweise durch das Betätigen eines Bedienelements 37, das an dem Lenkrad 17 angeordnet ist, verändert die Steuereinheit 25 die Darstellung der Informationen so, dass die am häufigsten (am längsten oder am längsten und häufigsten) betrachteten Darstellungselement 15' vergrößert und zentral dargestellt werden. Die weniger häufig (weniger lange oder weniger lange und/oder weniger häufig) betrachteten Darstellungselemente 15" werden weniger groß aber auch zentral dargestellt. Die selten betrachteten Darstellungselemente 15"' sind verkleinert am Rand dargestellt. Die am seltensten oder nie betrachteten Darstellungselemente 15^{IV} werden aus der Darstellung entfernt, d.h. ausgeblendet. Die an einem unteren Rand 39 der weiteren Anzeigefläche 13 der als Touchscreen ausgebildeten weiteren Anzeigevorrichtung 11 angeordneten Darstellungselemente 15^{V}, die beispielsweise als virtuelle Bedienelemente ausgestaltet sind, werden unverändert dargestellt. Bei diesen kann es sich beispielsweise um Sicherheitsrelevante Bedienoptionen oder Informationen handeln, die unabhängig von dem Blickverhalten immer dargestellt werden.

In der veränderten Darstellung haben sich sowohl Darstellungsgrößen als auch Darstellungspositionen verändert. Ferner ist vorgesehen, dass das am häufigsten betrachtete Darstellungselement 15^{VI} zusätzlich in einem Präferenzbereich 41 der Anzeigefläche 7 der Multifunktionsanzeige 5 dargestellt wird.

Die Vorrichtung zur Informationsvermittlung 19 kann so ausgestaltet sein, dass sie auch als Bedienvorrichtung verwendet werden kann. Eine Blickfixierung eines der Darstellungselemente gemeinsam mit einer Betätigung des Bedienelements 37 kann für ein Aktivieren einer mit dem fixierten Darstellungselement 15 verknüpften Funktion oder Funktionalität genutzt werden. Eine Bestätigung einer Blickfixierung kann auch über eine Spracherfassungseinheit (nicht dargestellt erfolgen).

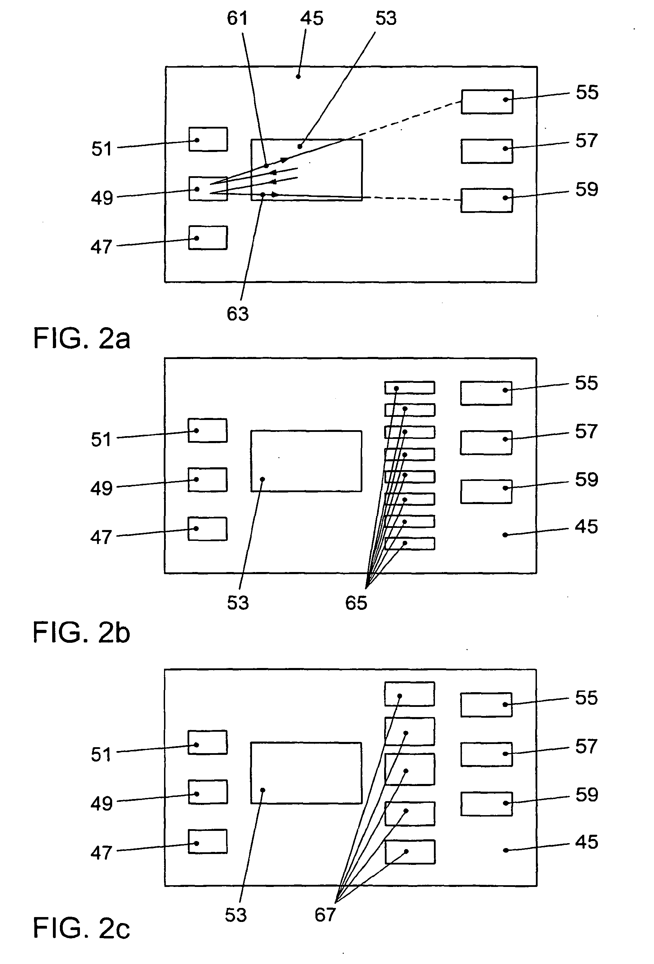

In Fig. 2a ist eine weitere Ansicht einer Anzeigefläche 45 einer Anzeigevorrichtung einer Vorrichtung zur Informationsvermittlung dargestellt. Unterschiedliche Darstellungselemente 47 bis 59 sind dargestellt. Dargestellt sind ferner zwei Blickrichtungssequenzen 61, 63. Zunächst werden jeweils die mit den Bezugszeichen 53 und 49 bezeichneten Darstellungselemente 53,49 in dieser Reihenfolge betrachtet. Bei der Blickrichtungssequenz 61 wandert der Blick dann in Richtung auf das mit dem Bezugszeichen 55 gekennzeichnete Darstellungselement 55 und die Blickrichtung bei der Blickrichtungssequenz 63 auf das mit dem Bezugszeichen 59 gekennzeichnete Darstellungselement 59. Anhand dieses Musters und der erkennbaren "Zielrichtung" des Blicks wird eine Bedienintention erkannt oder abgeleitet. Hier wird die Intention des Nutzers abgeleitet, das Darstellungselement 55 bzw. 59 zu fixieren und anschließend durch eine Betätigung eines Bedienelements (beispielsweise des Bedienelements 37 nach Fig. 1 a) eine Auswahl vorzunehmen, um anschließend weitere Darstellungselemente 65,67 angezeigt zu erhalten.

Die Darstellungen, die sich jeweils ergäben, sind in Fig. 2b und 2c dargestellt. Da die Bedienintention aus einer ermittelten Blickbewegung, das heißt, einem Blickverhalten abgeleitet ist, greift die Steuereinheit diesen Handlungen des Nutzers vor und stellt die Ansicht nach Fig. 2b (beim Erkennen der Blicksequenz 61) oder nach Fig. 2c (beim Erkennen der Blicksequenz 63) dar, ohne das eine Betätigungshandlung des Nutzers erfolgt. Hierdurch wird eine Informationsvermittlung beschleunigt und vereinfacht. Handelt es sich bei den Informationen um Bedieninformationen (beispielsweise virtuelle Bedienelemente), so wird auch eine Bedienung beschleunigt. Ist beispielsweise die in den Figuren 2a bis 2c dargestellte Anzeigefläche als Touchscreenoberfläche ausgebildet und handelt es sich bei den neu eingeblendeten Darstellungselementen 65,67 beispielsweise um virtuelle Bedienelemente, so kann mittels einer Berührung dieser Darstellungselemente 65,67 jeweils eine mit diesen verknüpfte Funktion oder Funktionalität ausgelöst werden. Hierdurch wird durch eine aus der Blickbewegung oder dem Blickverhalten abgeleitete Bedienintention genutzt, um eine mechanische Bedienhandlung, hier ein Betätigen des Touchscreens, zu beschleunigen. Bei Darstellungselementen 65,67, die eine Information darüber vermitteln, welche Funktion einem beispielsweise als Schalter ausgebildeten Bedienelement zugeordnet ist, kann auch eine mechanische Bedienung von anderen Bedienelementen beschleunigt und vereinfacht werden.

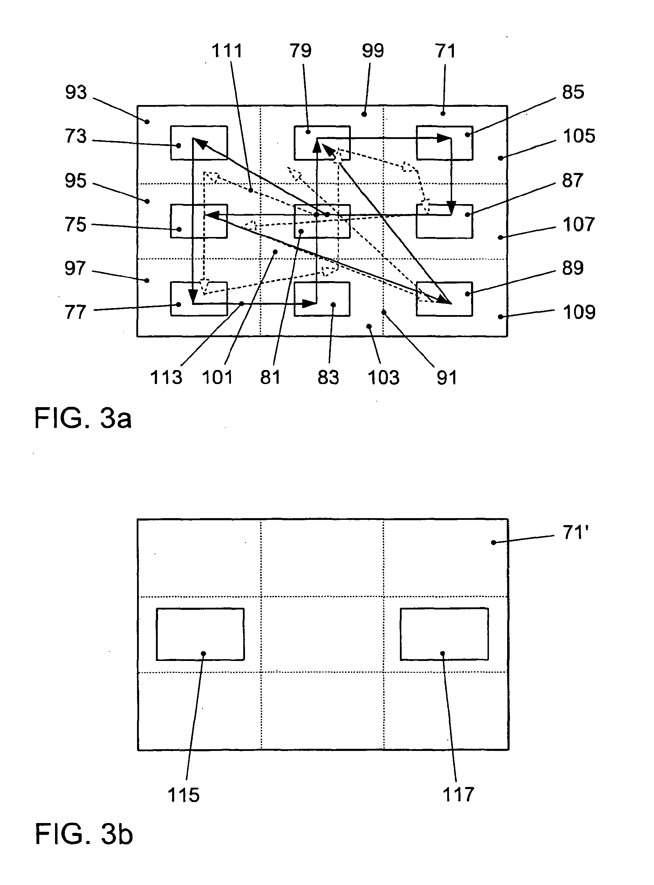

In Fig. 3a ist eine Ansicht einer weiteren Anzeigefläche 71 einer vorzugsweise als Touchscreen ausgebildeten Anzeigevorrichtung gezeigt. Dargestellt sind mehrere Darstellungselemente 73- 89. Zusätzlich ist gepunktet ein Raster 91 dargestellt. Das Raster 91 dient lediglich zur Veranschaulichung der Einteilung der Anzeigefläche in Felder 93-109. Dieses bedeutet, dass das Raster 91 für einen Betrachter nicht wahrnehmbar ist. Das Raster 91 dient zur Zuordnung der Blickrichtung (Blickposition) zu den Darstellungselementen 73-89. Wird der Blick in einem der Felder 93-109 erfasst, so wird dieser dem Darstellungselement 73-89 zugeordnet, dass in dem entsprechenden Feld 93-109 ganz oder zumindest teilweise dargestellt ist. Die dargestellte Rasterung 91 ist willkürlich gewählt. Eine Zuordnung der Blickrichtung (Blickposition) zu einem Darstellungselement 73-89 kann auch nach anderen Regeln erfolgen. Ist eine feine Rasterung 91 gewählt, kann eine Zuordnung auch zu einem Darstellungselement 73-89 vorgenommen werden, das in einem angrenzenden Feld 93-109 teilweise dargestellt ist. Beliebige andere Vorschriften können gewählt werden. Eine Rasterung 91 bietet den Vorteil, dass bei einer Blickrichtungssequenzauswertung eine Vielzahl von Blickrichtungen auf wenige Punkte, beispielsweise die Feldmittelpunkte, abgebildet werden können. Ebenso verhält es sich, wenn die Blickrichtungen den Informationen, d.h. den Darstellungselementen 73-89 direkt oder über eine Rasterung 91 zugeordnet werden.

In Fig. 3a ist eine Blickrichtungssequenz 111 mittels gerichteter Pfeile dargestellt. Zusätzlich ist eine hieraus abgeleitete Darstellungselementsequenz 113 dargestellt. Gegebenenfalls gemeinsam mit der nicht darstellbaren, jedoch erfassten und ausgewerteten Blickgeschwindigkeit, kann aus diesem Muster abgeleitet werden, dass der Nutzer bei der Informationserfassung überfordert ist. Hierauf reagiert die Vorrichtung zur Informationsermittlung, indem eine vereinfachte Informationsdarstellung gewählt wird, die einen weiteren Informations- oder Bedienschritt einfügt, der dem Nutzer eine reduzierte Information anzeigt und anbietet. Statt der neun als virtuelle Bedienelemente ausgestalteten Darstellungselemente 73-89 werden nun nur noch zwei als virtuelle Bedienelemente ausgebildete Darstellungselemente 115,117 angezeigt. Die sich ergebende Ansicht der Anzeigefläche 71' ist in Fig. 3b dargestellt.

Auch wenn in den beschriebenen Ausführungsformen fast durchgängig davon ausgegangen wird, dass die Blickrichtung einen betrachteten Ort angibt, sind andere Ausführungsformen, bei denen lediglich ein von dem Kopf des Nutzers ausgehender Vektor als Blickrichtung ermittelt wird, ebenfalls vorteilhaft. Eine Auswerteaufwand ist bei solchen Ausführungsformen wesentlich reduziert gegenüber anderen Ausführungsformen, die den betrachteten Ort ermitteln. Dennoch kann aus den so ermittelten Blickrichtungen auch ein Blickverhalten und beispielsweise eine Blickrichtungssequenz abgeleitet werden. Die im Zusammenhang mit den oben beschriebenen Ausführungsformen erläuterten Merkmale können selbstverständlich auch in Ausführungsformen verwendet werden, bei denen nur ein Vektor als Blickrichtung bestimmt wird. Die Ermittlung der Blickrichtung kann erneut zwischen einer Blickrichtungserfassungseinheit und einer Auswerteeinheit beliebig aufgeteilt sein.

Die hier beschriebenen Ausführungsformen sollen lediglich beispielhaften Charakter haben.

Für den Fachmann ergibt es sich, dass die Auswerteeinheit und die Steuereinheit sowohl in Hardware als auch in Software ausgebildet sein können, die auf einem programmgesteuerten Mikroprozessor ausführbar ist. Ferner ergibt es sich, dass die Auswerteeinheit und die Steuereinheit integriert ausgeführt sein können.

### Bezugszeichenliste

- 1: Kraftfahrzeugcockpit
- 3: Armaturenbrett
- 5: Multifunktionsanzeige
- 7: Anzeigefläche
- 9: Geschwindigkeitsmesser
- 11: weitere Anzeigevorrichtung
- 13: weitere Anzeigefläche
- 15: Darstellungselemente
- 17: Lenkrad
- 19: Vorrichtung zur Informationsvermittlung
- 21: Blickrichtungserfassungseinheit
- 23: Auswerteeinheit
- 25: Steuereinheit
- 27: erste Blickrichtungssequenz
- 29: Mittelpunkt des Geschwindigkeitsmessers
- 31: Tachonadel
- 33: Striche (die Geschwindigkeitswerte darstellen)
- 35: neues Darstellungselement
- 37: Bedienelement
- 39: unterer Rand der weiteren Anzeigefläche
- 41: Präferenzbereich
- 45: Anzeigefläche
- 47-59: Darstellungselement
- 61,69: Blickrichtungssequenzen
- 65,67: neu eingeblendete Darstellungselemente
- 71: Anzeigefläche
- 73-89: Darstellungselemente
- 91: Raster
- 93-109: Felder
- 111: Blickrichtungssequenz
- 113: Darstellungselement
- 115,117: Darstellungselemente

## Patentansprüche

1. Informationsvermittlungsvorrichtung (19) eines Kraftfahrzeugs zum visuellen Vermitteln von Informationen umfassend eine Anzeigeeinheit zum Anzeigen der visuellen Informationen, eine Steuereinheit (25), die die Darstellung der visuellen Informationen mittels der Anzeigeeinheit steuert, eine Blickrichtungserfassungseinheit (21), die eine Blickrichtung eines Nutzers erfasst, wobei eine Blickrichtung die Richtung angibt, entlang derer ein Blick des Nutzers gerichtet ist, und wobei die Steuereinheit (25) eine Darstellung der Informationen in Abhängigkeit von der erfassten Blickrichtung des Nutzers steuert, wobei die Steuereinheit (25) eine Auswerteeinheit (23) zum Auswerten der erfassten Blickrichtung umfasst, und die Anzeigeeinheit mindestens eine frei gestaltbare/programmierbare Anzeigefläche (7, 13) umfasst und die Steuereinheit (25) ausgebildet ist, eine Darstellung der visuellen Informationen auf der Anzeigefläche (7,13) zu verändern, wobei
die Auswerteeinheit zusätzlich zum Ermitteln eines Blickverhaltens mittels eines Auswertens der ermittelten Blickrichtungen ausgebildet ist, wobei eine Abfolge der erfassten Blickrichtungen und/oder Betrachtungsdauern der erfassten Blickrichtungen und/oder Betrachtungshäufigkeiten der erfassten Blickrichtungen ermittelt und ausgewertet werden, und die Steuereinheit (25) ausgebildet ist, abhängig von dem ermittelten Blickverhalten die Darstellung der visuellen Informationen auf der Anzeigefläche (7,13) zu verändern, wobei die aufgrund des ermittelten Blickverhaltens veränderte Darstellung eine Veränderung der Darstellungspositionen von mehreren Darstellungselementen (15) relativ zueinander auf der mindestens einen Anzeigefläche (7, 13) umfasst.

2. Informationsvermittlungsvorrichtung (19) nach Anspruch 1, **dadurch gekennzeichnet, dass** die Auswerteeinrichtung ausgebildet ist, die Blickrichtung als gerichtete Stecken anzusehen, die von dem oder den Augen des Nutzers ausgeht, und die einzelnen Blickrichtungen mit betrachteten Orten zu assoziieren, welche Schnittpunkte der gerichtete Strecke mit Objekten darstellen, so dass ein solcher betrachteter Ort als Blickrichtung angesehen werden.

3. Informationsvermittlungsvorrichtung (19) nach Anspruch 1 oder 2, **dadurch gekennzeichnet, dass** die aufgrund des ermittelten Blickverhaltens veränderte Darstellung eine Veränderung der Darstellungsgröße mindestens eines Darstellungselemente (15) auf der mindestens einen Anzeigefläche (7,13) umfasst.

4. Informationsvermittlungsvorrichtung (19) nach einem der genannten Ansprüche, **dadurch gekennzeichnet, dass** das Auswerten der erfassten Blickrichtung ein Ermitteln von wiederkehrenden Blickrichtungssequenzen (27,111) und/oder Darstellungselementsequenzen (113) umfasst, wobei Darstellungselementsequenzen (113) ermittelt werden, indem die Blickrichtungen über Darstellungspositionen der Darstellungselemente (73-89) den Darstellungselementen (73-89) zugeordnet werden.

5. Informationsvermittlungsvorrichtung (19) nach einem der genannten Ansprüche, **dadurch gekennzeichnet, dass** Auswerteeinheit (23) ausgebildet ist beim Ermitteln des Blickverhaltens nicht bevorzugte Gebiete der Anzeigefläche (7,13), die nicht im Blickfeld des Nutzers liegen oder für den Nutzer nur schlecht betrachtbar sind, und bevorzugte Gebiete zu ermitteln, die im Blickfeld des Nutzers liegen und gut betrachtbar sind, und die Steuereinheit (25) ausgestaltet ist, in der veränderten Darstellung ursprünglich in den nicht bevorzugten Gebieten dargestellte sicherheitsrelevante und/oder fahrrelevante Informationen (19) in den bevorzugten Gebieten darzustellen.

6. Informationsvermittlungsvorrichtung (19) nach einem der genannten Ansprüche, **dadurch gekennzeichnet, dass** die Blickrichtungserfassungseinheit (21) hinsichtlich des Nutzers berührungslos arbeitet.

7. Informationsvermittlungsvorrichtung (19) nach einem der genannten Ansprüche, **dadurch gekennzeichnet, dass** Auswerteeinheit (25) ausgebildet ist, für Darstellungselemente (15) eine Betrachtungshäufigkeit und/oder eine Betrachtungsdauer zu ermitteln, und die Steuereinheit ausgebildet ist, in der die veränderten Darstellung Darstellungselemente (15) abhängig von ihrer ermittelten Betrachtungshäufigkeit und/oder Betrachtungsdauer darzustellen, wobei die Darstellungselemente (15) mit einer größeren Betrachtungshäufigkeit und/oder einer längeren Betrachtungsdauer größer und/oder und zentraler oder in den bevorzugten Gebieten dargestellt werden.

8. Införmationsvermittlungsvorrichtung (19) nach einem der genannten Ansprüche, **dadurch gekennzeichnet, dass** die Steuereinheit (25) ausgebildet ist, in der veränderten Darstellung Darstellungselement (15) mit einer geringen Betrachtungsdauer und/oder Setrachtungshäufigkeit im Verhältnis zu anderen Darstellungselementen aus einem Informations- oder Bedienkontext durch Darstellungselemente anderer Bedienkontexte mit einer hohen Betrachtungsdauer und/oder Betrachtungshäufigkeit in deren originären Bedienkontext zu ersetzen.

9. Informationsvermittlungsvorrichtung (19) nach einem der genannten Ansprüche, **dadurch gekennzeichnet, dass** die Steuereinheit (25) ausgebildet ist, anhand einer ermittelten Blickrichtungssequenz (61,63), insbesondere einer hieraus abgeleiteten Blickrichtungsbewegung, eine Bedienintention abzuleiten und eine veränderte Darstellung zu veranlassen, die eine an die Bedienintention angepasste Darstellung von entsprechenden Darstellungselementen (65,67) veranlasst, wobei mindestens ein Darstellungselement (65,67) zusätzlich oder zumindest vergrößert oder an einer veränderten Darstellungsposition angezeigt wird.

10. Informationsvermittlungsvorrichtung (19) nach einem der genannten Ansprüche, **dadurch gekennzeichnet, dass** die Steuereinheit (25) ausgebildet ist, anhand einer Analyse der Blickrichtungssequenz (111) und/oder der Darstellungselementsequenz (113) eine aktuelle Überforderung des Nutzers zu ermitteln und in der veränderten Darstellung Hilfeoptionen anbietende Darstellungselemente einzufügen und/oder Darstellungselemente (73-89) durch zusammenfassende Darstellungselemente (115,117) zu ersetzen, um eine übersichtlichere Darstellung zu schaffen.

11. Informationsvermittlungsvorrichtung (19) nach einem der genannten Ansprüche, **dadurch gekennzeichnet, dass** die Anzeigefläche (7) ein Präferenzgebiet (41) umfasst, und die Auswerteeinheit (23) ausgebildet ist, Präferenzgewichte anhand von den Darstellungselementen (15) zugewiesenen vorgegebenen Gewichtungsfaktoren, deren Betrachtungshäufigkeiten und deren Betrachtungsdauem zu ermitteln, und die Steuereinheit (25) ausgebildet ist, in dem Präferenzgebiet (41) der Darstellungsfläche (7) Darstellungselemente (15) ausgewählt nach ihrem Präferenzgewicht darzustellen.

12. Verfahren zum visuellen Vermitteln von Informationen in einem Kraftfahrzeug umfassend die Schritte: Anzeigen der visuellen Informationen mittels einer Anzeigeeinheit des Kraftfahrzeugs, Erfassen einer Blickrichtung eines Nutzers mittels einer Blickrichtungserfassungseinheit (21), wobei die Blickrichtung die Richtung angibt, entlang derer ein Blick des Nutzers gerichtet ist, und wobei eine Darstellung der informationen in Abhängigkeit von der erfassten Blickrichtung des Nutzers gesteuert wird, wobei
die erfassten Blickrichtungen ausgewertet werden, um ein Blickverhalten zu ermitteln, indem eine Abfolge der erfassten Blickrichtungen und/oder Betrachtungsdauem entlang der erfassten Blickrichtungen und/oder Betrachtungshäufigkeiten der erfassten Blickrichtungen ermittelt und ausgewertet werden, und eine Darstellung der visuellen Informationen auf mindestens einer frei gestaltbaren/programmierbaren Anzeigefläche (7,13) der Anzeigeeinheit abhängig von dem ermittelten Blickverhalten verändert wird, wobei aufgrund des ermittelten Blickverhaltens beim Verändern der Darstellung Darstellungspositionen von mehreren Darstellungselementen (15) relativ zueinander auf der mindestens einen Anzeigefläche (13) verändert werden.

13. Verfahren nach Anspruch 12, **dadurch gekennzeichnet, dass** die Blickrichtung mit betrachteten Orten assoziiert werden, indem die Blickrichtungen jeweils als gerichtete Strecken angesehen werden, die von dem oder den Augen des Nutzers ausgehen, und die Blickrichtung eindeutig mit jenem Ort als dem betrachteten Ort assoziiert werden, welcher einen Schnittpunkt der gerichteten Strecke mit einem Objekt darstellt.

14. Verfahren nach Anspruch 12 oder 13, **dadurch gekennzeichnet, dass** aufgrund des ermittelten Blickverhaltens beim Verändern der Darstellung eine Darstellungsgröße mindestens eines Darstellungselements (15') auf der mindestens einen Anzeigefläche (13) geändert wird.

15. Verfahren nach einem der Ansprüche 12 bis 14, **dadurch gekennzeichnet, dass** beim Auswerten der erfassten Blickrichtung wiederkehrende Blickrichtungssequenzen (61,63) und/oder Darstellungselementsequenzen ermittelt werden, wobei Darstellungselementsequenzen ermittelt werden, indem die Blickrichtungen über Darstellungspositionen der Darstellungselemente (47-59) den Darstellungselementen (47-59) zugeordnet werden.

16. Verfahren nach einem der Ansprüche 12 bis 15, **dadurch gekennzeichnet, dass** beim Auswerten des Blickverhaltens nicht bevorzugte Gebiete der Anzeigefläche (7,13), die nicht im Blickfeld des Nutzers liegen oder für den Nutzer nur schlecht betrachtbar sind, und bevorzugte Gebiete ermittelt werden, die im Blickfeld des Nutzers siegen und gut betrachtbar sind, und die Garstellung so verändert wird, dass ursprünglich in den nicht bevorzugten Gebieten dargestellte sicherheitsrelevante und/oder fahrrelevante Informationen (9,9') in den bevorzugten Gebieten dargestellt werden.

17. Verfahren nach einem der Ansprüche 12 bis 16, **dadurch gekennzeichnet, dass** die Blickrichtungserfassung hinsichtlich des Nutzers berührungslos ausgeführt wird.

18. Verfahren nach einem der Ansprüche 12 bis 17, **dadurch gekennzeichnet, dass** für die Darstellungselemente (15) eine Betrachtungshäufigkeit und/oder eine Betrachtungsdauer ermittelt werden und die Darstellungselemente (15) abhängig von ihrer ermittelten Betrachrtungshäufigkeit und/oder Betrachtungsdauer verändert dargestellt werden, wobei die Darstellungselemente mit einer größeren Betrachtungshäufigkeit und/oder einer längeren Betrachtungsdauer größer und/oder zentraler oder in dem oder den bevorzugt betrachteten Gebieten dargestellt werden.

19. Verfahren nach einem der Ansprüche 12 bis 18, **dadurch gekennzeichnet, dass** Darstellungselemente mit einer geringen Betrachtungsdauer und/oder Betrachtungshäufigkeit im Verhältnis zu anderen Darstellungselementen aus einem Informations- oder Bedienkontext durch Darstellungselemente anderer Bedienkontexte mit einer hohen Betrachtungsdauer und/oder Betrachtungshäuflgkeit in deren originären Bedienkontext ersetzt werden.

20. Verfahren nach einem der Ansprüche 12 bis 19, **dadurch gekennzeichnet, dass** anhand einer ermittelten Blickrichtungssequenz (61,63), insbesondere einer hieraus abgeleiteten Blickrichtungsbewegung, eine Bedienintention abgeleitet wird und eine an die Bedienintention angepasste Darstellung von entsprechenden Darstellungselementen (65,67) vorgenommen wird, wobei mindestens ein Darstellungselement (65,67) zusätzlich oder zumindest vergrößert oder an einer veränderten Darstellungsposition angezeigt wird.

21. Verfahren nach einem der Ansprüche 12 bis 20, **dadurch gekennzeichnet, dass** anhand einer Analyse der Blickrichtungssequenz (111) und/oder der Darstellungselementsequenz (113) eine aktuelle Überforderung des Nutzers ermittelt wird und bei einer ermittelten Überforderung Hilfeoptionen anbietende Darstellungselemente eingefügt und/oder Darstellungselemente (75-89) durch zusammenfassende Darstellungselemente (115,117) ersetzt werden, um eine übersichtlichere Darstellung zu schaffen.

22. Verfahren nach einem der Ansprüche 12 bis 21, **dadurch gekennzeichnet, dass** auf der die Anzeigefläche (7) ein Präferenzgebiet (41) festgelegt wird, und Präferenzgewichte anhand von den Darstellungselementen zugewiesenen vorgegebenen Gewichtungsfaktoren, deren ermittelten Betrachtungshäufigkeiten und deren ermittelten Betrachtungsdauern bestimmt werden und in dem Präferenzgebiet (41) der Darstellungsfläche (7) Darstellungselemente (15) ausgewählt nach ihrem Präferenzgewicht dargestellt werden.

## Claims

1. Information communicating device (19) of a motor vehicle for visually communicating information comprising a display unit for displaying the visual information, a control unit (25) which controls the representation of the visual information by means of the display unit, and a viewing direction sensing unit (21) which senses a viewing direction of a user, wherein a viewing direction indicates the direction in which the user's gaze is directed, and wherein the control unit (25) controls a representation of the information as a function of the sensed viewing direction of the user, wherein the control unit (25) comprises an evaluation unit (23) for evaluating the sensed viewing direction, and the display unit comprises at least one freely configurable/programmable display area (7, 13), and the control unit (25) is designed to change a representation of the visual information on the display area (7, 13), wherein
the evaluation unit is additionally designed to determine a viewing behaviour by means of an evaluation of the determined viewing directions, wherein a sequence of sensed viewing directions and/or viewing durations of the sensed viewing directions and/or viewing frequencies of the sensed viewing directions are/is determined and evaluated, and the control unit (25) is designed to change the representation of the visual information on the display area (7, 13) as a function of the determined viewing behaviour, wherein the representation which is changed on the basis of the determined viewing behaviour comprises a change in the representation positions of a plurality of representation elements (15) in relation to one another on the at least one display area (7, 13).

2. Information communicating device (19) according to Claim 1, **characterized in that** the evaluation device is designed to consider the viewing direction as directional lines which start from the user's eye or eyes, and to associate the individual viewing directions with locations which are being viewed and which constitute intersection points of the directional lines with objects so that such a location which is being viewed can be considered to be the viewing direction.

3. Information communicating device (19) according to Claim 1 or 2, **characterized in that** the representation which is changed on the basis of the determined viewing behaviour comprises a change in the representation size of at least one representation element (15) on the at least one display area (7, 13).

4. Information communicating device (19) according to one of the specified claims, **characterized in that** the evaluation of the sensed viewing direction comprises a determination of recurrent viewing direction sequences (27, 111) and/or representation element sequences (113), wherein representation element sequences (113) are determined by assigning the viewing directions to the representation elements (73-89) by means of representation positions of the representation elements (73-89).

5. Information communicating device (19) as claimed in one of the specified claims, **characterized in that** the evaluation unit (23) is designed to determine, during the determination of the viewing behaviour, non preferred regions of the display area (7, 13), which do not lie in the user's field of vision or which can only be viewed poorly by the user, and to determine preferred regions which lie in the user's field of vision and can be viewed well, and the control unit (25) is configured to represent, in the preferred regions in the changed representation, safety-relevant and/or driving-relevant information (19) which was originally represented in the non-preferred regions.

6. Information communicating device (19) according to one of the specified claims, **characterized in that** the viewing direction sensing unit (21) operates in a contactless fashion with respect to the user.

7. Information communicating device (19) according to one of the specified claims, **characterized in that** the evaluation unit (25) is designed to determine a viewing frequency and/or a viewing duration for representation elements (15), and the control unit is designed to represent representation elements (15) in the changed representation as a function of their determined viewing frequency and/or viewing duration, wherein the representation elements (15) with a relatively high viewing frequency and/or a relatively long viewing duration, are represented in a larger size and/or in a more central fashion or in the preferred regions.

8. Information communicating device (19) according to one of the specified claims, **characterized in that** the control unit (25) is designed to replace, in the changed representation, representation elements (15) with a short viewing duration and/or a low viewing frequency compared to other representation elements from an information context or operator control context by means of representation elements of other operator control contexts with a long viewing duration and/or high viewing frequency in the original operator control context thereof.

9. Information communicating device (19) according to one of the specified claims, **characterized in that** the control unit (25) is designed to derive an operator control intention on the basis of a determined viewing direction sequence (61, 63), in particular a viewing direction movement which is derived therefrom, and to bring about a changed representation which gives rise to a representation of corresponding representation elements (65, 67) which is adapted to the operator control intention, wherein at least one representation element (65, 67) is displayed additionally or at least in an enlarged size or at a changed representation position.

10. Information communicating device (19) according to one of the preceding claims, **characterized in that** the control unit (25) is designed to determine current overloading of the user on the basis of an analysis of the viewing direction sequence (111) and/or of the representation element sequence (113), and to insert, in the changed representation, representation elements which offer help options and/or to replace representation elements (73-89) by summarizing representation elements (115, 117) in order to produce a representation which provides a clearer overview.

11. Information communicating device (19) according to one of the specified claims, **characterized in that** the display area (7) comprises a preference region (41), and the evaluation unit (23) is designed to determine preference weightings on the basis of predefined weighting factors which are assigned by the representation elements (15), and to determine the viewing frequencies and the viewing durations of said preference weightings, and the control unit (25) is designed to represent, in the preference region (41) of the representation area (7), representation elements (15) which are selected according to their preference weighting.

12. Method for visually communicating information in a motor vehicle comprising the steps: display of the visual information by means of a display unit of the motor vehicle, sensing of a user's viewing direction by means of a viewing direction sensing unit (21), wherein the viewing direction indicates the direction in which a user's gaze is directed, and wherein a representation of the information is controlled as a function of the sensed viewing direction of the user, wherein
the sensed viewing directions are evaluated in order to determine a viewing behaviour by determining and evaluating a sequence of the sensed viewing directions and/or viewing durations in the sensed viewing directions and/or by determining and evaluating viewing frequencies of the sensed viewing directions, and a representation of the visual information on at least one freely configurable/programmable display area (7, 13) of the display unit is changed as a function of the determined viewing behaviour, wherein, during the changing of the representation, representation positions of a plurality of representation elements (15) in relation to one another on the at least one display area (13) are changed on the basis of the determined viewing behaviour.

13. Method according to Claim 12, **characterized in that** the viewing direction is associated with locations which are being viewed by considering the viewing directions in each case as directional lines which start from the user's eye or eyes, and the viewing direction is unambiguously associated with that location as the location which is being viewed and which constitutes an intersection point of the directional line with an object.

14. Method according to Claim 12 or 13, **characterized in that**, when the representation is changed, a representation size of at least one representation element (15') on the at least one display area (13) is changed on the basis of the determined viewing behaviour.

15. Method according to one of Claims 12 to 14, **characterized in that**, during the evaluation of the sensed viewing direction, recurrent viewing direction sequences (61, 63) and/or representation element sequences are determined, wherein representation element sequences are determined by assigning the viewing directions to the representation elements (47-59) by means of representation positions of the representation elements (47-59).

16. Method according to one of Claims 12 to 15, **characterized in that**, during evaluation of the viewing behaviour, non preferred regions of the display area (7, 13) which do not lie in the user's field of vision or which can only be viewed poorly by the user are determined, and preferred regions which lie in the user's field of vision and can be viewed well are determined, and the representation is changed in such a way that safety-relevant and/or driving-relevant information (9, 9') which was originally represented in the non preferred regions is represented in the preferred regions.

17. Method according to one of Claims 12 to 16, **characterized in that** the sensing of the viewing direction is carried out in a contactless fashion with respect to the user.

18. Method according to one of Claims 12 to 17, **characterized in that** a viewing frequency and/or a viewing duration are determined for the representation elements (15), and the representation elements (15) are represented changed as a function of their determined viewing frequency and/or viewing duration, wherein the representation elements with a relatively high viewing frequency and/or a relatively long viewing duration are represented in a larger size and/or in a more central fashion and/or in the region or regions which is/are preferably viewed.

19. Method according to one of Claims 12 to 18, **characterized in that** representation elements with a short viewing duration and/or low viewing frequency compared to other representation elements from an information context or operator control context are replaced by means of representation elements of other operator control contexts with a long viewing duration and/or high viewing frequency in the original operator control context thereof.

20. Method according to one of Claims 12 to 19, **characterized in that** an operator control intention is derived on the basis of a determined viewing direction sequence (61, 63), in particular a viewing direction movement which is derived therefrom, and a representation, adapted to the operator control intention, of corresponding representation elements (65, 67) is performed, wherein at least one representation element (65, 67) is displayed additionally or at least in an enlarged size or at a changed representation position.

21. Method according to one of Claims 12 to 20, **characterized in that** current overloading of the user is determined on the basis of an analysis of the viewing direction sequence (111) and/or the representation element sequence (113), and, when overloading is determined, representation elements which offer help options are inserted and/or representation elements (75-89) are replaced by summarizing representation elements (115, 117) in order to produce a representation which provides a clearer overview.

22. Method according to one of Claims 12 to 21, **characterized in that** a preference region (41) is specified on the display area (7), and preference weightings are specified on the basis of predefined weighting factors which are assigned by the representation elements, and the determined viewing frequencies thereof and the determined viewing durations thereof are specified, and representation elements (15) are represented in the preference region of the representation area (7) selected according to their preference weighting.

## Revendications

1. Dispositif de communication d'informations (19) d'un véhicule automobile pour la communication visuelle d'informations, comprenant une unité d'affichage pour afficher des informations visuelles, une unité de commande (25) qui commande la représentation des informations visuelles au moyen de l'unité d'affichage, une unité de détection de la direction d'observation (21) qui détecte la direction d'observation d'un utilisateur, une direction d'observation indiquant la direction dans laquelle est orienté le regard de l'utilisateur, et l'unité de commande (25) commandant une représentation des informations en fonction de la direction d'observation détectée de l'utilisateur, l'unité de commande (25) comprenant une unité d'interprétation (23) pour interpréter la direction d'observation détectée et l'unité d'affichage comprenant au moins une surface d'affichage (7, 13) pouvant être configurée/programmée librement et l'unité de commande (25) étant configurée pour modifier la représentation des informations visuelles sur la surface d'affichage (7, 13), l'unité d'interprétation étant en plus configurée pour déterminer un comportement d'observation par le biais d'une interprétation des directions d'observation déterminées, une séquence des directions d'observation détectées et/ou des durées d'observation dans les directions d'observation détectées et/ou des fréquences d'observation dans les directions d'observation détectées étant déterminées et interprétées et l'unité de commande (25) étant configurée pour modifier la représentation des informations visuelles sur la surface d'affichage (7, 13) en fonction du comportement d'observation, la représentation modifiée sur la base du comportement d'observation déterminé incluant une modification des positions de représentation de plusieurs éléments de représentation (15) les uns par rapport aux autres sur l'au moins une surface d'affichage (7, 13).

2. Dispositif de communication d'informations (19) selon la revendication 1, **caractérisé en ce que** l'unité d'interprétation est configurée pour considérer la direction d'observation comme un trajet dirigé qui part de l'oeil de l'utilisateur et pour associer les directions d'observation individuelles avec les endroits observés, lesquels représentent les points d'intersection du trajet dirigé avec des objets, de sorte qu'un tel endroit observé peut être considéré comme une direction d'observation.

3. Dispositif de communication d'informations (19) selon la revendication 1 ou 2, **caractérisé en ce que** la représentation modifiée sur la base du comportement d'observation déterminé inclut une modification de la taille représentée d'au moins un élément de représentation (15) sur l'au moins une surface d'affichage (7, 13).

4. Dispositif de communication d'informations (19) selon l'une des revendications mentionnées, **caractérisé en ce que** l'interprétation de la direction d'observation détectée inclut une détermination des séquences de directions d'observation (27, 111) et/ou des séquences d'éléments de représentation (113) récurrentes, les séquences d'éléments de représentation (113) étant déterminées en associant aux éléments de représentation (73-89) les directions d'observation par le biais des positions de représentation des éléments de représentation (73-89).

5. Dispositif de communication d'informations (19) selon l'une des revendications mentionnées, **caractérisé en ce que** l'unité d'interprétation (23) est configurée pour, lors de la détermination du comportement d'observation, déterminer les régions non préférées de la surface d'affichage (7, 13), lesquelles ne se trouvent pas dans le champ de vision de l'utilisateur ou qui sont difficilement visibles par l'utilisateur, et aussi les régions préférées, lesquelles se trouvent dans le champ de vision de l'utilisateur et sont faciles à observer, et l'unité de commande (25) est configurée pour, dans la représentation modifiée, représenter dans les régions préférées les informations (19) concernant la sécurité et/ou concernant la conduite qui étaient à l'origine représentées dans les régions non préférées.

6. Dispositif de communication d'informations (19) selon l'une des revendications mentionnées, **caractérisé en ce que** l'unité de détection de la direction d'observation (21) fonctionne sans contact de la part de l'utilisateur.

7. Dispositif de communication d'informations (19) selon l'une des revendications mentionnées, **caractérisé en ce que** l'unité d'interprétation (25) est configurée pour déterminer pour les éléments de représentation (15) une fréquence d'observation et/ou une durée d'observation et l'unité de commande est configurée pour représenter les éléments de représentation (15) dans la représentation modifiée en fonction de leur fréquence d'observation et/ou durée d'observation déterminée, les éléments de représentation (15) dont la fréquence d'observation est plus grande et/ou la durée d'observation plus longue étant représentés plus grands et/ou plus au centre dans les zones préférées.

8. Dispositif de communication d'informations (19) selon l'une des revendications mentionnées, **caractérisé en ce que** l'unité de commande (25) est configurée pour remplacer dans la représentation modifiée les éléments de représentation (15) dont la durée d'observation et/ou la fréquence d'observation est plus faible par rapport à celle des autres éléments de représentation et faisant partie d'un contexte d'information ou de commande par les éléments de représentation d'autres contextes de commande ayant une durée d'observation et/ou une fréquence d'observation plus élevée dans leur contexte de commande d'origine.

9. Dispositif de communication d'informations (19) selon l'une des revendications mentionnées, **caractérisé en ce que** l'unité de commande (25) est configurée pour, au moyen d'une séquence de direction d'observation (61, 63) déterminée, notamment d'un mouvement de direction d'observation qui en découle, déduire une intention de commande et ordonner une représentation modifiée qui donne lieu à une représentation adaptée à l'intention de commande des éléments de représentation (65, 67) correspondants, au moins un élément de représentation (65, 67) étant affiché en complément ou au moins grossi ou encore à une position de représentation modifiable.

10. Dispositif de communication d'informations (19) selon l'une des revendications mentionnées, **caractérisé en ce que** l'unité de commande (25) est configurée pour déterminer au moyen d'une analyse de la séquence de directions d'observation (111) et/ou de la séquence d'éléments de représentation (113) une surcharge momentanée de l'utilisateur et, dans la représentation modifiée, pour insérer des éléments de représentation qui proposent des options d'aide et/ou remplacer des éléments de représentation (73-89) par des éléments de représentation (115, 117) condensés afin de réaliser une représentation plus aérée.

11. Dispositif de communication d'informations (19) selon l'une des revendications mentionnées, **caractérisé en ce que** la surface d'affichage (7) comprend une région de préférence (41) et l'unité d'interprétation (23) est configurée pour déterminer les poids de préférence au moyen de facteurs de pondération prédéfinis attribués aux éléments de représentation (15), de leurs fréquences d'observation et de leurs durées d'observation et l'unité de commande (25) est configurée pour représenter dans la région de préférence (41) de la surface de représentation (7) les éléments de représentation (15) sélectionnés en fonction du poids de leur préférence.

12. Procédé de communication visuelle d'informations dans un véhicule automobile comprenant les étapes suivantes : l'affichage des informations visuelles au moyen d'une unité d'affichage du véhicule automobile, la détection d'une direction d'observation d'un utilisateur au moyen d'une unité de détection de la direction d'observation (21), la direction d'observation indiquant la direction dans laquelle est orienté un regard de l'utilisateur, et la représentation des informations étant commandée en fonction de la direction d'observation détectée de l'utilisateur, les directions d'observation détectées étant interprétées afin de déterminer un comportement d'observation en déterminant et en interprétant une séquence des directions d'observation détectées et/ou des durées d'observation dans les directions d'observation détectées et/ou des fréquences d'observation dans les directions d'observation détectées, et une représentation des informations visuelles sur au moins une surface d'affichage (7, 13) pouvant être configurée/programmée librement de l'unité d'affichage étant modifiée en fonction du comportement d'observation déterminé, les positions de représentation de plusieurs éléments de représentation (15) les uns par rapport aux autres sur l'au moins une surface d'affichage (13) étant modifiées en se basant sur le comportement d'observation déterminé lors de la modification de la représentation.

13. Procédé selon la revendication 12, **caractérisé en ce que** la direction d'observation est associée avec des endroits voisins en considérant les directions d'observation à chaque fois comme des trajets dirigés qui partent de l'oeil ou des yeux de l'utilisateur et les directions d'observation sont associées explicitement avec l'endroit considéré comme l'endroit observé, lequel représente un point d'intersection du trajet dirigé avec un objet.

14. Procédé selon la revendication 12 ou 13, **caractérisé en ce que** du fait du comportement d'observation déterminé, la grandeur de représentation d'au moins un élément de représentation (15') est modifiée sur l'au moins une surface d'affichage (13) en cas de modification de la représentation.

15. Procédé selon l'une des revendications 12 à 14, **caractérisé en ce que** lors de l'interprétation de la direction d'observation détectée, les séquences de direction d'observation (61, 63) répétitives et/ou les séquences d'éléments de représentation sont déterminées, les séquences d'éléments de représentation étant déterminées en associant aux éléments de représentation (47-59) les directions d'observation au-dessus des positions de représentation des éléments de représentation (47-59).

16. Procédé selon l'une des revendications 12 à 15, **caractérisé en ce que** lors de l'interprétation du comportement d'observation sont déterminées les régions non préférées de la surface d'affichage (7, 13), lesquelles ne se trouvent pas dans le champ de vision de l'utilisateur ou qui sont difficilement visibles par l'utilisateur, ainsi que les régions préférées, lesquelles se trouvent dans le champ de vision de l'utilisateur et sont faciles à observer, et la représentation est modifiée de telle sorte que les informations (19) concernant la sécurité et/ou concernant la conduite qui étaient à l'origine représentées dans les régions non préférées sont représentées dans les régions préférées.

17. Procédé selon l'une des revendications 12 à 16, **caractérisé en ce que** la détection de la direction d'observation est effectuée sans contact de la part de l'utilisateur.

18. Procédé selon l'une des revendications 12 à 17, **caractérisé en ce qu'**une fréquence d'observation et/ou une durée d'observation sont déterminées pour les éléments de représentation (15) et les éléments de représentation (15) sont représentés modifiés en fonction de leur fréquence d'observation et/ou durée d'observation déterminée, les éléments de représentation dont la fréquence d'observation est plus grande et/ou la durée d'observation plus longue étant représentés plus grands et/ou plus au centre ou alors dans la ou dans les zones considérées préférées.

19. Procédé selon l'une des revendications 12 à 18, **caractérisé en ce que** les éléments de représentation dont la durée d'observation et/ou la fréquence d'observation est plus faible par rapport à celle des autres éléments de représentation et faisant partie d'un contexte d'information ou de commande sont remplacés par les éléments de représentation d'autres contextes de commande ayant une durée d'observation et/ou une fréquence d'observation plus élevée dans leur contexte de commande d'origine.

20. Procédé selon l'une des revendications 12 à 19, **caractérisé en ce qu'**une intention de commande est déduite au moyen d'une séquence de directions d'observation (61, 63) déterminée, notamment d'un mouvement de direction d'observation qui en découle, et une représentation des éléments de représentation (65, 67) correspondants adaptée à l'intention de commande étant effectuée, au moins un élément de représentation (65, 67) étant affiché en complément ou au moins grossi ou encore à une position de représentation modifiable.

21. Procédé selon l'une des revendications 12 à 20, **caractérisé en ce qu'**une surcharge momentanée de l'utilisateur est déterminée au moyen d'une analyse de la séquence de directions d'observation (111) et/ou de la séquence d'éléments de représentation (113) et, en présence d'une surcharge constatée, des éléments de représentation qui proposent des options d'aide sont insérés et/ou les éléments de représentation (73-89) sont remplacés par des éléments de représentation (115, 117) condensés afin de réaliser une représentation plus aérée.

22. Procédé selon l'une des revendications 12 à 21, **caractérisé en ce qu'**une région de préférence (41) est définie sur la surface d'affichage (7) et des poids de préférence sont déterminés au moyen de facteurs de pondération prédéfinis attribués aux éléments de représentation, de leurs fréquences d'observation déterminées et de leurs durées d'observation déterminées, et les éléments de représentation (15) sont représentés dans la région de préférence (41) de la surface de représentation (7) en étant sélectionnés en fonction du poids de leur préférence.
